# EUROPEAN PATENT APPLICATION

(11) **EP 4 671 708 A1**
(43) Date of publication of application: **31.12.2025**
(21) Application number: 25184190.4
(22) Date of filing: 20.06.2025
(51) Int. Cl.: G01G 23/00

(54) **FOOD PRODUCT SCALE AND ASSOCIATED ADJUSTABLE SUPPORT FOOT ASSEMBLY**

(30) Priority: 27.06.2024 US 202418756811
(71) Applicant: Illinois Tool Works Inc., Glenview IL 60025 (US)
(72) Inventor: HOLMES, Robert Andrew, Glenview, 60025 (US); TAYLOR, Ian D., Glenview, 60025 (US); REDMAN, Randall L., Glenview, 60025 (US); KNOBLAUCH, Austin, Glenview, 60025 (US)
(74) Representative: HGF

(57) **Abstract**

A scale includes a scale body, a weigh station on the scale body and at least one support foot adjustably connected to the scale body for enabling leveling. The scale body includes a base component defining a foot attachment region to which the support foot is connected, wherein the foot attachment region includes a threaded opening and a plurality of detent stop features spaced radially away from the threaded opening. The support foot includes a threaded extension threadedly engaged in the threaded opening, and at least one detent feature selectively engageable with the detent stop features to limit rotatability of the support foot.

## Description

### TECHNICAL FIELD

This application relates generally to scales used for weighing food product in supermarkets, groceries and other stores, and, more particularly, to a scale including adjustable support feet.

### BACKGROUND

In typical commercial food product scale applications the scale is used to weigh food products and determines prices for the food products, and an associated printer prints a label for application to the food product. An operator enters a product number, such as a PLU (price look-up) number, for the product being weighed and the scale accesses its database, or accesses a remote database, for pricing information on the product. The total price for the item is then determined based upon its weight. Price can also be determined based upon item count. In either case, the food product scale typically prints a label with the price and other information for the product.

Such scales should generally be leveled for best performance. For this purpose, scales have included adjustable support feet. One current implementation of such adjustable support feet utilizes a foot part with a threaded shaft that threads into a threaded opening at the bottom of the scale body, and a locking nut that is used to fix the foot part in position by rotating the lock not up against the bottom of the scale body. This arrangement requires the use of a tool to loosen and tighten the lock not for the purpose of foot height adjustment during the leveling process.

It would be desirable to provide a scale and with a more user-friendly adjustable support foot arrangement to allow for scale leveling.

### SUMMARY

In one aspect, a scale includes a scale body, a weigh station on the scale body and at least one support foot adjustably connected to the scale body for enabling leveling. The scale body includes a base component defining a foot attachment region to which the support foot is connected, wherein the foot attachment region includes a threaded opening and a plurality of detent stop features spaced radially away from the threaded opening. The support foot includes a threaded extension threadedly engaged in the threaded opening, and at least one detent feature selectively engageable with the detent stop features to limit rotatability of the support foot.

In another aspect, a scale includes a scale body and a weigh station on scale body. The scale body includes a base component defining a foot attachment region, wherein the foot attachment region includes a threaded opening and a plurality of detent stop features disposed around the threaded opening. The base component is a base casting and the threaded opening and the detent stop features are cast-in features of the base casting so as to be monolithic with the base casting.

The details of one or more embodiments are set forth in the accompanying drawings and the description below. Other features, objects, and advantages will be apparent from the description and drawings, and from the claims.

### BRIEF DESCRIPTION OF THE DRAWINGS

Figs. 1 and 2 show perspective views of a scale;
Fig. 3 shows a perspective view with label cassette removed;
Fig. 4 shows a partial perspective of a printhead region within the cassette receiving station;
Figs. 5 and 6 show partial perspectives of an adjustment foot connection;
Fig. 7 shows a perspective view of a base casting of the scale;
Fig. 8 shows a partial top perspective of a foot connection to the base casting;
Figs. 9-11 show partial bottom perspectives of the foot connection and/or foot;
Fig. 12 shows a perspective cross-section of the foot connection;
Figs. 13 and 14 show cross-sections of the foot connection;
Fig. 15 shows a partial perspective of a recess of the base casting and associated detent stop features; and
Figs. 16-18 show perspective views of a foot in isolation.

### DETAILED DESCRIPTION

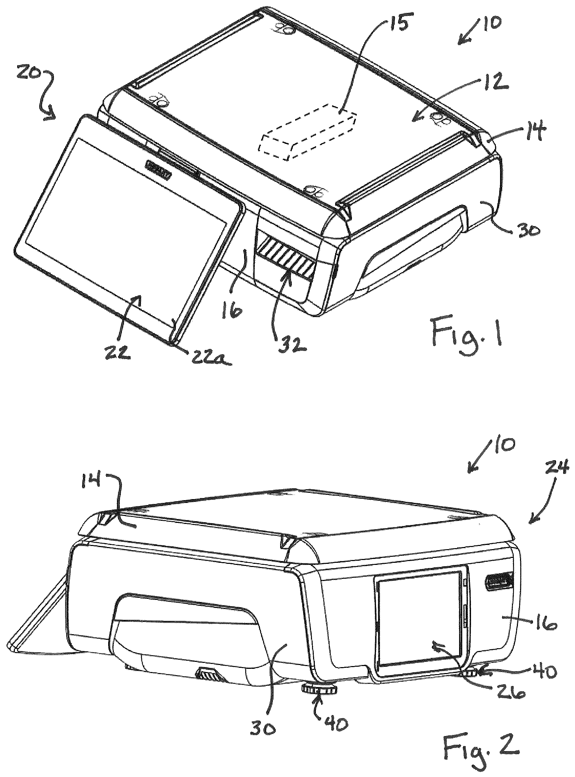

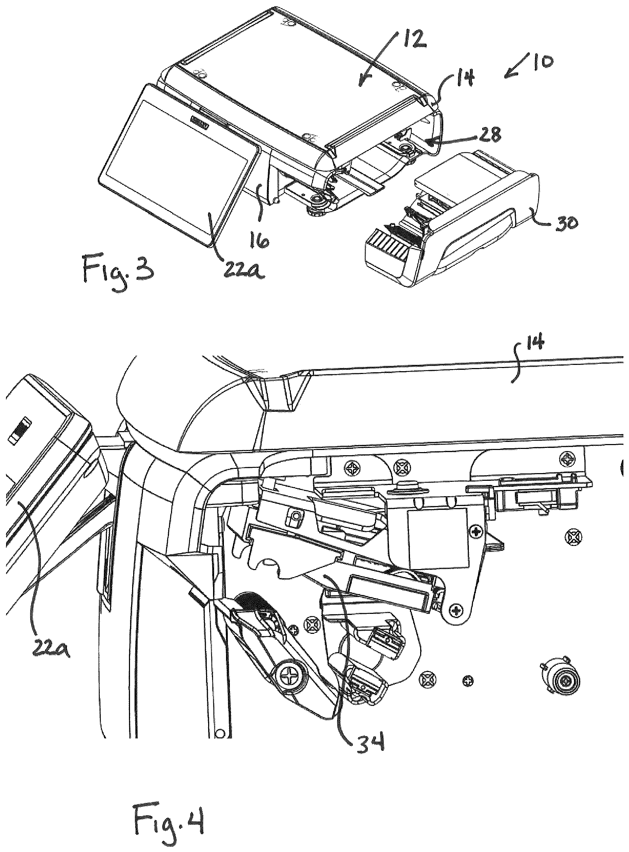

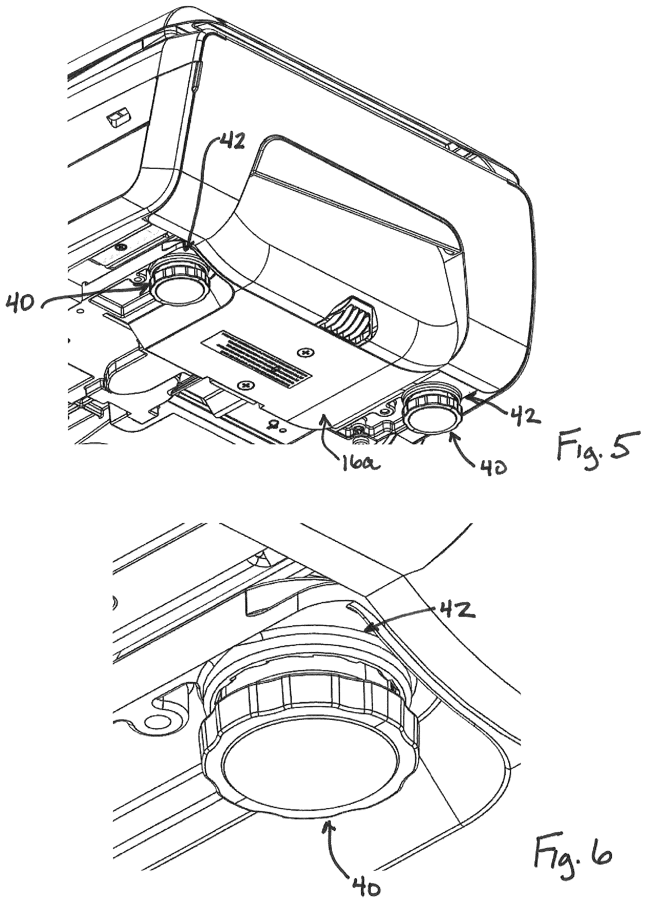

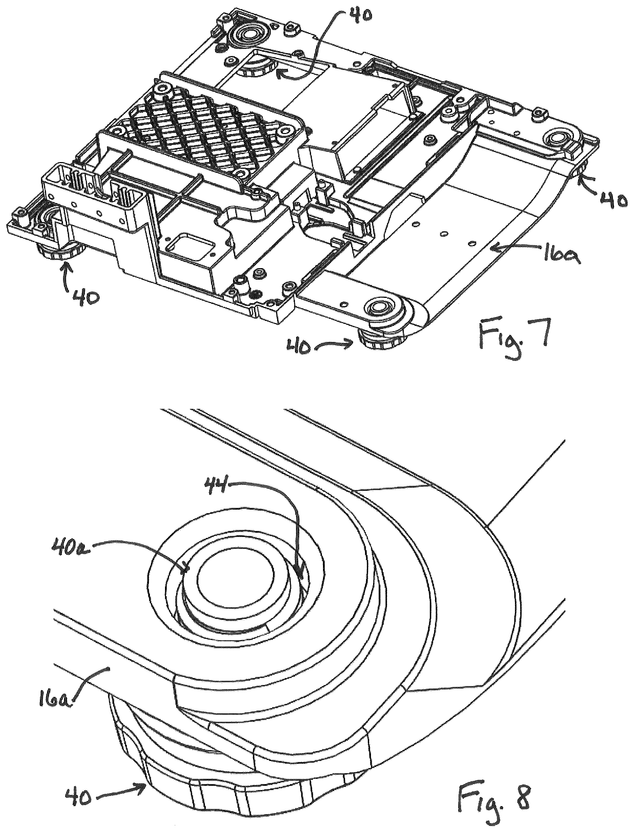

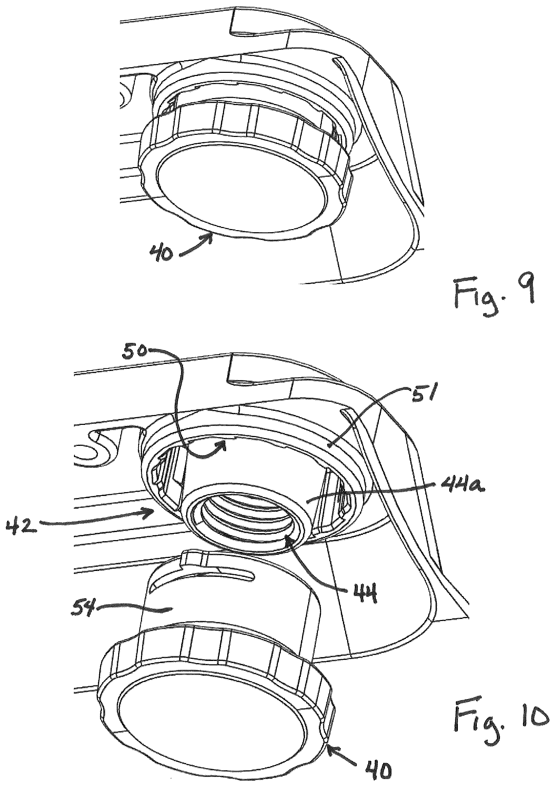

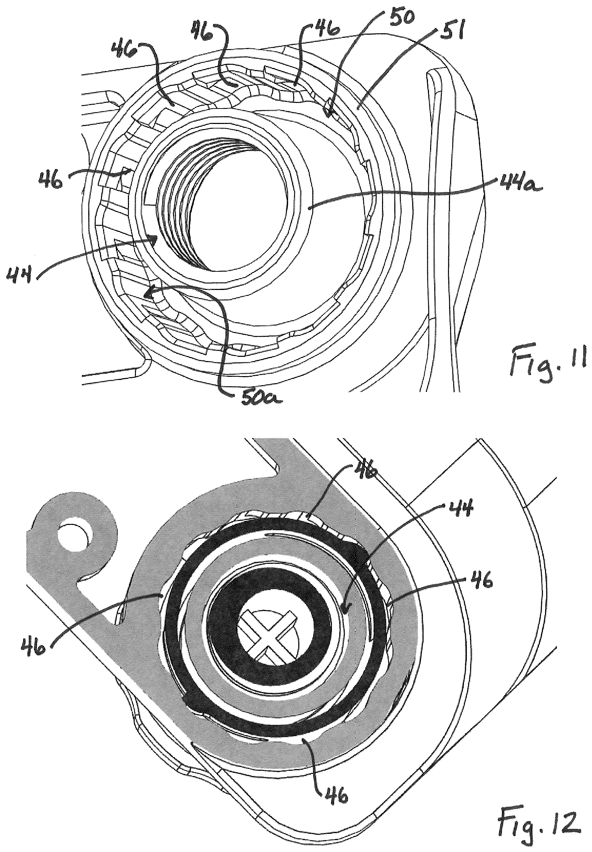

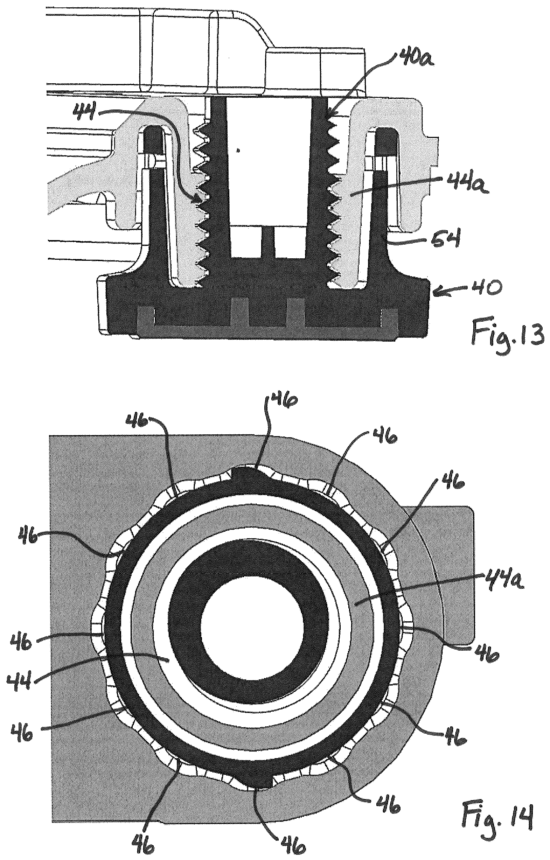

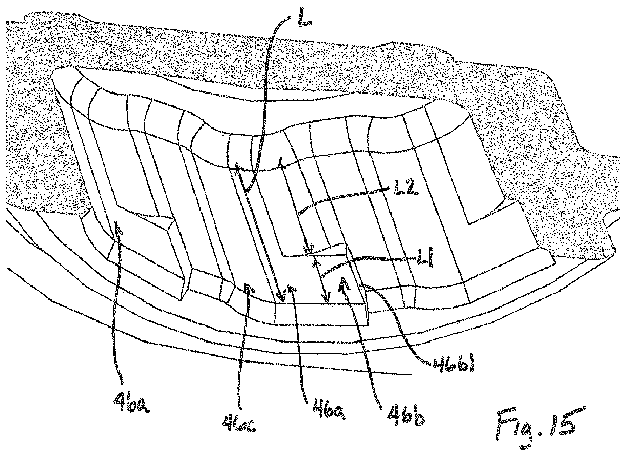

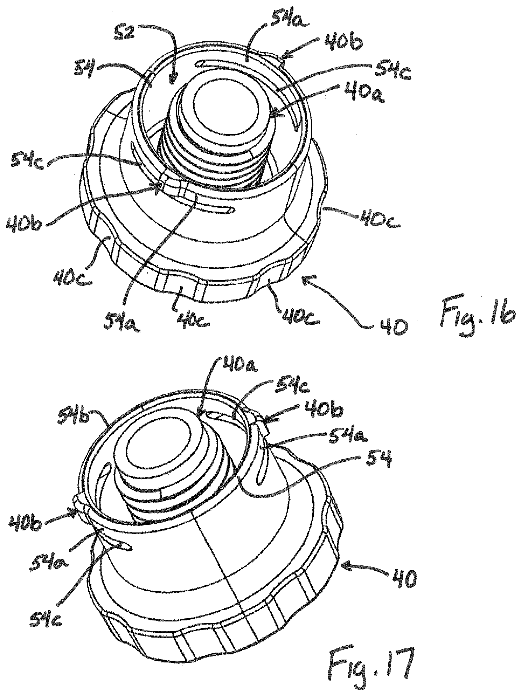

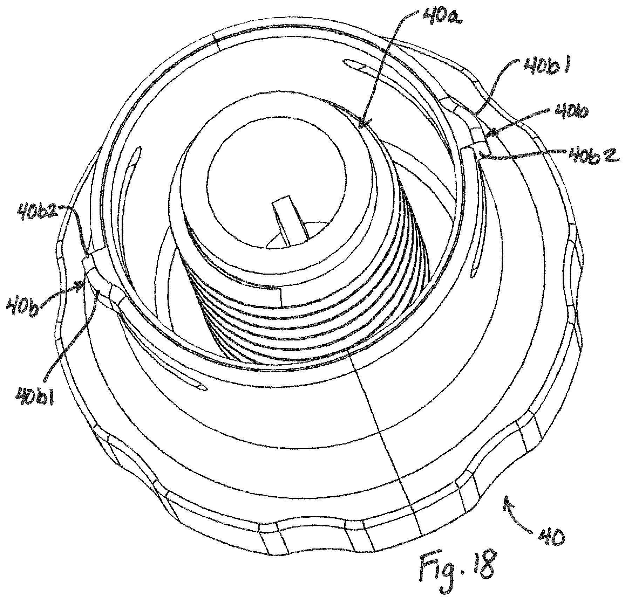

Referring to Figs. 1-18, an exemplary scale configuration, or portions thereof, is shown. The scale 10 includes a weighing station 12, which in some embodiments may be formed by a weighing platter 14 that can be removed (e.g., for cleaning) from atop the scale body 16. A platter support bracket (not shown) transfers forces to a mechanism, such as a load cell 15 located internal of the scale body 16, for producing weight indicative signals when items are placed on the weighing station. An operator interface side 20 of the scale includes an operator interface 22 configured to display information associated with scale operations. By way of example, the operator interface 22 may be formed by a touch-screen display 22a. A customer interface side 24 of the scale includes a customer interface 26, which in certain embodiments may be formed by any suitable display screen technology.

A side portion of the scale body incudes a cassette station 28 that receives a removable label stock cassette 30 that defines a label exit slot 32. A label printer (e.g., a printhead 34) is located within the scale body and may use any suitable printing technology for printing on labels of a label supply roll loaded in the cassette, which printed labels then exit the label exit slot 32 to be applied to products.

The scale 10 includes a plurality of support feet 40 adjustably connected to the scale body 16 for enabling leveling of the scale 10. Here, the scale body 16 comprises a base component 16a and various housing parts that collectively define an internal space of the scale. The base component 16a defines foot attachment regions 42 to which the support feet 40 are connected, such that rotation of each support foot 40 changes a vertical distance between the bottom surface of the support foot and the bottom of the scale body, with each support foot 40 being adjustable independently of the other support feet.

Each foot attachment region 42 includes a threaded opening 44 and a plurality of detent stop features 46 that are spaced radially away from the threaded opening 44. Here, the detent stop features are spaced radially outward of the threaded opening 44. Each support foot 40 includes a threaded extension 40a threadedly engaged or engageable into a corresponding one of the threaded openings 44, and at least one detent feature 40b selectively engageable with the detent stop features 46 to limit rotatability of the support foot 40. In the illustrated embodiment, two detent features 40b are provided on the support foot 40 and arranged on diametrically opposite sides of the support foot 40. Here, six or more (e.g., such as at least eight, or at least ten or at least twelve (as shown)) detent stop features 46 are disposed around the threaded opening 44 at a substantially uniform angular spacing (e.g., sixty degrees in the case of six detent stops, forty-five degrees in the case of eight detent stops, thirty-six degrees in the case of ten detent stops and thirty degrees in the case of twelve detent stops).

The bottom of each support foot is designed with circumferentially distributed indents 40c, which provide a gripping location when installing and/or adjusting the support foot.

The detent feature(s) 40b and the detent stop features 46 are cooperatively configured such that when a rotational torque above a set threshold is applied to the support foot 40 the detent feature(s) 40b will move out of the detent stop features 48 that they are initially engaged in and into next adjacent ones of the detent stop features. Basically, the detent feature(s) 40b selectively engage into and out of the detent stop features 48 during rotation of the support foot 40.

Here, the base component 16a is a metal base casting and the threaded openings 44 and the detent stop features 46 are cast-in features of the base casting, so as to be monolithic and unitary with the base casting. Each threaded opening 44 is formed within a corresponding tubular extension or wall 44a of the base casting, wherein the tubular extension 44a is disposed at least partly within a surrounding recess 50 in the base casting, and the detent stop features 46 are formed along a radially inward facing wall 50a of the surrounding recess 50. The wall surface 50a is formed at least partly along a length of a tubular wall 51 that surrounds the tubular wall 44a. The illustrated detent stop features are formed as axially running slots 46a spaced radially outward of the threaded opening 44, each axially running slot 46a bounded by first and second sidewall regions 46b and 46c.

Here, the detent features 40b are radially outward projecting tabs that are engageable within each of the axially running slots 46a. The detent features 40b are radially moveable (here radially inwardly) for enabling movement of the projecting tab from one of the axially running slots to another one of the axially running slots. In one embodiment, each support foot 40 is a molded plastic component, and the threaded extension 40a and the detent features 40b are molded-in features so as to be monolithic and unitary with the molded support foot. The threaded extension 40a is a tubular extension that is externally threaded, and the tubular extension is located at least partly within a recess 52, which recess is defined by a tubular wall 54 disposed around and spaced radially outward from the tubular extension 40a, where the detent features 40b are disposed on and project radially outward from the tubular wall 54. The tubular wall 54 includes flexing end band regions 54a and the detent features 40b are disposed on the flexing end band regions 54a. Each flexing end band region 54a is formed between an end edge 54b of the tubular wall and a slot opening 54c in the tubular wall that is spaced from the end edge 54b such that the flexing end band region 54a is defined as a thin band on the tubular wall.

Here, each detent stop feature 46 (axial slots 46a) includes an axial extent or length L. A first part L1 of the axial extent is configured to require application of a first rotational torque to rotate the support foot 40 in a counterclockwise direction to move the detent features 40b from respective ones of the detent stop features 46 to other ones of the detent stop features 46. A second part L2 of the axial extent is configured to require application of a second rotational torque to rotate the support foot 40 in the counterclockwise direction to move the detents 40b from respective ones of the detent stop features 46 to other ones of the detent stop features 46. The first rotational torque is greater than the second rotational torque, and the first axial part L1 is located at a foot entry end of the foot attachment region, while the second axial part L2 is located deeper into the base casting.

Here, the above torque characteristic is achieved, by having both the first and second sidewall regions 46b and 46c in the second axial part L2 formed with tapers (flat or curved), while in the first axial part L1 sidewall region 46c is formed with a taper, but sidewall region 46b is formed as more of a flat stop 46b1 (e.g., running radially or near radially). Similarly, one side of each detent feature 40b is formed with a taper 40b1 on one side, and more of a flat stop 40b2 (e.g., running radially or near radially) on the other side, where the flat stop 40b2 is oriented for interacting with the sidewall region 46b.

Generally, it is the interaction between the surfaces of the detent features and the sidewall regions of the axial slots that forces the end band regions 54a to flex and thus the detent features 40b to move radially outward of the axial slots 46a during rotation. Thus, more rotation torque must be applied to rotate the support foot counterclockwise and out of the base casting when the detent features 40b are in the first axial part L1 of the slot, because the relative orientation of the force between interacting surfaces has less of a radial component.

Thus, when unscrewing the support foot 40, on the last few threads, before the foot fully separates from the base casting, the substantially radially extending surfaces 46b1 and 40b2 start to engage with each other, providing a higher resistance to unscrewing. This provides an indication to a user that the support foot 40 is almost fully unscrewed.

Overall advantages provide by the above support foot arrangement include allowing for simplicity of installing and adjusting the height of the unit to level before use. Better aesthetics of the scale are also achieved due to the low-profile design of each support foot and the ability for the mechanism to be internal to the scale base casting.

It is to be clearly understood that the above description is intended by wayof illustration and example only, is not intended to be taken by way of limitation, and that other changes and modifications are possible.
Certain embodiments of the invention are described in the following clauses:
Clause 1. A scale, comprising:
   a scale body;
   a weigh station on the scale body;
   at least one support foot adjustably connected to the scale body for enabling leveling;
   wherein the scale body includes a base component defining a foot attachment region to which the support foot is connected, wherein the foot attachment region includes a threaded opening and a plurality of detent stop features spaced radially away from the threaded opening;
   wherein the support foot includes a threaded extension threadedly engaged in the threaded opening, and at least one detent feature selectively engageable with the detent stop features to limit rotatability of the support foot.
Clause 2. The scale of clause 1, wherein the detent feature and the detent stop features are cooperatively configured such that when a rotational torque above a set threshold is applied to the support foot the detent feature will move past an adjacent one of the detent stop features and into a next one of the detent stop features.
Clause 3. The scale of clause 1, wherein the base component is a base casting and the threaded opening and the detent stop features are cast-in features of the base casting so as to be monolithic with the base casting.
Clause 4. The scale of clause 3, wherein the threaded opening is formed within a tubular extension of the base casting, wherein the tubular extension is disposed at least partly within a recess in the base casting, and the detent stop features are formed along a radially inward facing wall of the recess.
Clause 5. The scale of clause 1, wherein at least six detent stop features are disposed around the threaded opening at a substantially uniform angular spacing.
Clause 6. The scale of clause 1, wherein the support foot is a molded plastic component, wherein the threaded extension and the detent feature are molded-in features so as to be monolithic with the molded plastic component.
Clause 7. The scale of clause 6, wherein the threaded extension is a tubular extension that is externally threaded, wherein the tubular extension is located at least partly within a recess defined by a tubular wall disposed around and spaced radially outward from the tubular extension, where the detent feature is disposed on and projects radially outward from the tubular wall.
Clause 8. The scale of clause 6, wherein the tubular wall includes a flexing region and the detent feature is disposed on the flexing region.
Clause 9. The scale of clause 8, wherein the flexing region is formed between an end edge of the tubular wall and a slot opening in the tubular wall that is spaced from the end edge such that the flexing region is defined as a thin band on the tubular wall.
Clause 10. The scale of clause 1, wherein each detent stop feature includes an axial extent, wherein a first part of the axial extent is configured to require application of a first rotational torque to rotate the support foot in a counterclockwise direction to move the detent from one of the detent stop features to another one of the detent stop features, wherein a second part of the axial extent is configured to require application of a second rotational torque to rotate the support foot in the counterclockwise direction to move the detent from one of the detent stop features to another one of the detent stop features, wherein the first rotational torque is greater than the second rotational torque, wherein the first axial extent is located at a foot entry end of the foot attachment region.
Clause 11. The scale of clause 1, wherein the detent stop features are axially running slots spaced radially outward of the threaded opening, each axially running slot bounded by first and second axial sidewall regions, wherein the detent feature is a projecting tab that is engageable within each of the axially running slots, wherein the detent feature is radially moveable for rotating the support foot to move the projecting tab from one of the axially running slots to another one of the axially running slots.
Clause 12. A scale, comprising:
   a scale body;
   a weigh station on scale body;
   wherein the scale body includes a base component defining a foot attachment region, wherein the foot attachment region includes a threaded opening and a plurality of detent stop features disposed around the threaded opening, wherein the base component is a base casting and the threaded opening and the detent stop features are cast-in features of the base casting so as to be monolithic with the base casting.
Clause 13. The scale of clause 12, wherein the detent stop features are axially running slots spaced radially outward of the threaded opening, each axially running slot bounded by first and second axial sidewall regions.
Clause 14. The scale of clause 12, wherein the threaded opening is formed on a first wall surface of the base casting, wherein the detent stop features are formed on a second wall surface of the base casting, wherein the second wall surface is radially outward of the first wall surface.
Clause 15. The scale of clause 14, wherein the first wall surface is a radially inward facing surface of a first tubular wall, wherein the second wall surface is spaced radially outward of the first tubular wall.
Clause 16. The scale of clause 12, further comprising:
   at least one support foot adjustably connected to the scale body for enabling leveling, wherein the support foot includes a threaded extension threadedly engaged in the threaded opening, and at least one detent feature selectively engageable with the detent stop features to inhibit adjustment of the support foot unless a rotational torque above a set threshold is applied to the support foot.
Clause 17. The scale of clause 16, wherein the support foot is a molded plastic component, wherein the threaded extension and the detent feature are molded-in features so as to be monolithic with the molded plastic component.
Clause 18. The scale of clause 12, wherein each detent stop feature includes an axial extent, wherein a first part of the axial extent is configured to require application of a first rotational torque to rotate the support foot in a counterclockwise direction to move the detent from one of the detent stop features to another one of the detent stop features, wherein a second part of the axial extent is configured to require application of a second rotational torque to rotate the support foot in the counterclockwise direction to move the detent from one of the detent stop features to another one of the detent stop features, wherein the first rotational torque is greater than the second rotational torque, wherein the first axial extent is located at a foot entry end of the foot attachment region.

## Claims

1. A scale, comprising:
a scale body;
a weigh station on the scale body;
at least one support foot adjustably connected to the scale body for enabling leveling;
wherein the scale body includes a base component defining a foot attachment region to which the support foot is connected, wherein the foot attachment region includes a threaded opening and a plurality of detent stop features spaced radially away from the threaded opening;
wherein the support foot includes a threaded extension threadedly engaged in the threaded opening, and at least one detent feature selectively engageable with the detent stop features to limit rotatability of the support foot.

2. The scale of claim 1, wherein the detent feature and the detent stop features are cooperatively configured such that when a rotational torque above a set threshold is applied to the support foot the detent feature will move past an adjacent one of the detent stop features and into a next one of the detent stop features.

3. The scale of claim 1, wherein the base component is a base casting and the threaded opening and the detent stop features are cast-in features of the base casting so as to be monolithic with the base casting, and optionally wherein the threaded opening is formed within a tubular extension of the base casting, wherein the tubular extension is disposed at least partly within a recess in the base casting, and the detent stop features are formed along a radially inward facing wall of the recess.

4. The scale of claim 1, wherein at least six detent stop features are disposed around the threaded opening at a substantially uniform angular spacing.

5. The scale of claim 1, wherein the support foot is a molded plastic component, wherein the threaded extension and the detent feature are molded-in features so as to be monolithic with the molded plastic component.

6. The scale of claim 5, wherein the threaded extension is a tubular extension that is externally threaded, wherein the tubular extension is located at least partly within a recess defined by a tubular wall disposed around and spaced radially outward from the tubular extension, where the detent feature is disposed on and projects radially outward from the tubular wall.

7. The scale of claim 5, wherein the tubular wall includes a flexing region and the detent feature is disposed on the flexing region and optionally wherein the flexing region is formed between an end edge of the tubular wall and a slot opening in the tubular wall that is spaced from the end edge such that the flexing region is defined as a thin band on the tubular wall.

8. The scale of claim 1, wherein each detent stop feature includes an axial extent, wherein a first part of the axial extent is configured to require application of a first rotational torque to rotate the support foot in a counterclockwise direction to move the detent from one of the detent stop features to another one of the detent stop features, wherein a second part of the axial extent is configured to require application of a second rotational torque to rotate the support foot in the counterclockwise direction to move the detent from one of the detent stop features to another one of the detent stop features, wherein the first rotational torque is greater than the second rotational torque, wherein the first axial extent is located at a foot entry end of the foot attachment region.

9. The scale of claim 1, wherein the detent stop features are axially running slots spaced radially outward of the threaded opening, each axially running slot bounded by first and second axial sidewall regions, wherein the detent feature is a projecting tab that is engageable within each of the axially running slots, wherein the detent feature is radially moveable for rotating the support foot to move the projecting tab from one of the axially running slots to another one of the axially running slots.

10. A scale, comprising:
a scale body;
a weigh station on scale body;
wherein the scale body includes a base component defining a foot attachment region, wherein the foot attachment region includes a threaded opening and a plurality of detent stop features disposed around the threaded opening, wherein the base component is a base casting and the threaded opening and the detent stop features are cast-in features of the base casting so as to be monolithic with the base casting.

11. The scale of claim 10, wherein the detent stop features are axially running slots spaced radially outward of the threaded opening, each axially running slot bounded by first and second axial sidewall regions.

12. The scale of claim 10, wherein the threaded opening is formed on a first wall surface of the base casting, wherein the detent stop features are formed on a second wall surface of the base casting, wherein the second wall surface is radially outward of the first wall surface and optionally wherein the first wall surface is a radially inward facing surface of a first tubular wall, wherein the second wall surface is spaced radially outward of the first tubular wall.

13. The scale of claim 10, further comprising:
at least one support foot adjustably connected to the scale body for enabling leveling, wherein the support foot includes a threaded extension threadedly engaged in the threaded opening, and at least one detent feature selectively engageable with the detent stop features to inhibit adjustment of the support foot unless a rotational torque above a set threshold is applied to the support foot.

14. The scale of claim 13, wherein the support foot is a molded plastic component, wherein the threaded extension and the detent feature are molded-in features so as to be monolithic with the molded plastic component.

15. The scale of claim 10, wherein each detent stop feature includes an axial extent, wherein a first part of the axial extent is configured to require application of a first rotational torque to rotate the support foot in a counterclockwise direction to move the detent from one of the detent stop features to another one of the detent stop features, wherein a second part of the axial extent is configured to require application of a second rotational torque to rotate the support foot in the counterclockwise direction to move the detent from one of the detent stop features to another one of the detent stop features, wherein the first rotational torque is greater than the second rotational torque, wherein the first axial extent is located at a foot entry end of the foot attachment region.
